# FASCICULE DE BREVET EUROPEEN

(11) **EP 0 329 576 B1**
(45) Date de publication et mention de la délivrance du brevet: **21.04.1993**
(21) Numéro de dépôt: 89420050.0
(22) Date de dépôt: 15.02.1989
(51) Int. Cl.: H04N 5/12

(54) **Circuit de reconnaissance de synchronisation ligne**
Erkennungsschaltung zur Zeilensynchronisierung
Line synchronisation recognition circuit

(30) Priorité: 19.02.1988 FR 8802266
(43) Date de publication de la demande: 23.08.1989
(73) Titulaire: SGS-THOMSON MICROELECTRONICS S.A., 94250 Gentilly (FR)
(72) Inventeur: Merval, Jean-Marc, F-38120 Saint Egrève (FR); Perrin, Danika, F-38100 Grenoble (FR)
(74) Mandataire: de Beaumont, Michel

(56) Documents cités:
- EP-A- 0 091 719
- EP-A- 0 253 402
- US-A- 4 467 359
- ELECTRONIC ENGINEERING, vol. 56, no. 689, mai 1984, pages 77-80, London, GB; A. HENNIGAN: "Deflection processor eliminating tv hold controls"

## Description

La présente invention concerne les téléviseurs et plus particulièrement un circuit de reconnaissance de la présence ou de l'absence des impulsions de synchronisation ligne dans un signal video composite.

En effet, parmi les divers circuits constituant un téléviseur, il est utile, en plus des circuits destinés à former les signaux de balayage ligne à partir des impulsions de synchronisation ligne, de vérifier si ces impulsions de synchronisation ligne sont bien reçues. La sortie d'un circuit de reconnaissance de synchronisation ligne peut par exemple être utilisée pour arrêter la recherche automatique initiale de fréquence des circuits d'accord automatique d'un téléviseur quand une émission est présente sur l'antenne, pour couper le son du téléviseur en l'absence d'émission pour éviter d'émettre du bruit, ou pour réduire pendant une courte durée la constante de temps d'asservissement de la boucle à verrouillage de phase (PLL) du circuit de fourniture du signal de balayage horizontal de façon à accélérer l'accrochage de cette boucle lors de la détection d'une émission ou d'un changement de canal.

De tels circuits sont déjà connus dans l'art antérieur, par exemple à partir du document EP-A-0 253 402, et un exemple en est représenté en figure 1.

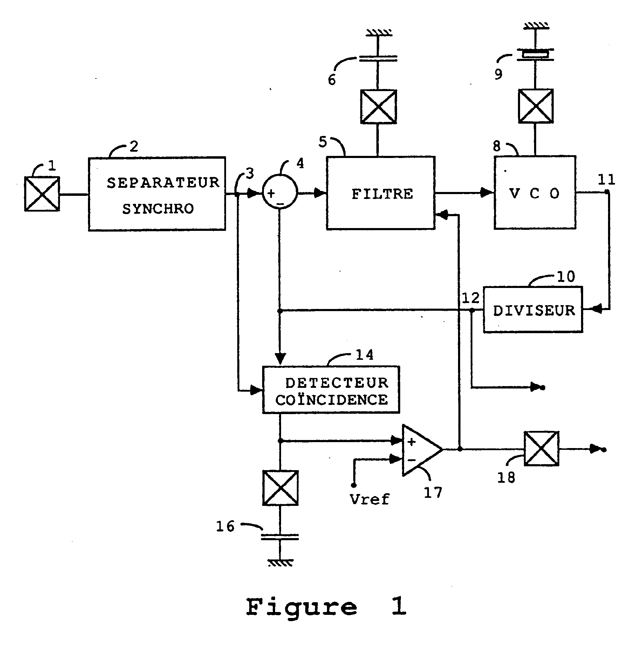

Dans le circuit de la figure 1, le signal vidéo susceptible d'incorporer les impulsions de synchronisation est reçu sur une borne 1 et envoyé à un circuit séparateur de signal de synchronisation 2. La sortie 3 de ce circuit séparateur de synchronisation est envoyée à une entrée d'une boucle à verrouillage de phase comprenant un multiplieur ou comparateur de phase 4, un filtre 5 associé à une capacité 6 extérieure au circuit intégré, un oscillateur à fréquence commandée par une tension (VCO) 8 associé à un quartz 9 externe au circuit intégré, et un diviseur 10 connecté à la sortie 11 du VCO et dont la sortie 12 est reliée à l'autre entrée du multiplieur 4. Le signal de balayage ligne est disponible à la sortie 12 du diviseur 10. Ce diviseur 10 est utile parce que le VCO 8 est amené à fonctionner non pas à une fréquence voisine de la fréquence attendue du signal de synchronisation mais à une fréquence multiple de celle-ci, du fait que l'on se place dans des domaines de fréquence où il existe des quartz de faible coût pour fixer la fréquence libre du VCO.

Le circuit de reconnaissance de signal vidéo proprement dite comprend un détecteur de coïncidence 14 relié entre la sortie 3 du séparateur de synchronisation 2 et la sortie 12 de la boucle d'asservissement. Ce détecteur 14 fournit un courant de charge à un condensateur 16, externe au circuit intégré, lorsque ses deux signaux d'entrée sont en coïncidence de phase, la tension sur ce condensateur 16 étant comparée à une tension de référence par un comparateur 17 pour fournir le signal de reconnaissance vidéo sur une borne de sortie 18. On a en outre représenté une connexion entre le signal de reconnaissance vidéo et le filtre 5. Cette connexion est souvent utilisée pour modifier la constante de temps du filtre. En effet, en l'absence de signal de synchronisation ligne, il est souhaitable que la boucle capte le plus vite possible un signal reçu et pour cela on choisit de conférer au filtre une constante de temps courte. Par contre, une fois que la boucle est accrochée, il est souhaitable d'augmenter la constante de temps du filtre pour améliorer la stabilité et l'élimination du bruit.

Etant donné les progrès constants et les améliorations de qualité que l'on recherche dans les postes de télévision, on s'aperçoit que ce dispositif de reconnaissance de signaux de synchronisation de l'art antérieur devient inadéquat. En effet, il présente des inconvénients. En effet, le fonctionnement du circuit de reconnaissance présuppose le fonctionnement de la boucle de verrouillage de phase. Le fait que la boucle de verrouillage de phase fonctionne en permanence, même en l'absence de signaux de synchronisation sur la borne d'entrée de signal vidéo, entraîne pendant ces phases un balayage à une fréquence mal déterminée. Ceci peut être génant dans certaines applications où l'on cherche par exemple à incruster du texte dans une image en utilisant le balayage horizontal. Par ailleurs, du point de vue des coûts de fabrication, ce circuit de l'art antérieur, de type analogique, nécessite la prévision d'un condensateur 16 de valeur relativement importante pour accumuler les signaux fournis par le détecteur de coïncidence 14 et s'affranchir du bruit. Il est bien connu dans le domaine de la fabrication des circuits intégrés que, pour baisser les coûts de fabrication d'un circuit, il convient d'augmenter au maximum son intégration et d'éviter les bornes extérieures et les condensateurs de haute valeur qui ne peuvent être intégrés.

La présente invention vise à prévoir un circuit de reconnaissance de signal vidéo qui soit exempt de tous ces inconvénients des circuits de l'art antérieur, c'est-à-dire qui soit entièrement numérique, qui ne nécessite pas l'utilisation d'un condensateur externe et dont le fonctionnement soit indépendant de l'accrochage de la boucle à verrouillage de phase.

Pour atteindre ces objets ainsi que d'autres, la présente invention prévoit un circuit de reconnaissance d'un signal de synchronisation ligne dans un signal vidéo conforme à la revendication 1.

Des modes de réalisation particuliers de l'invention sont exposés dans les sous-revendications.

Ainsi, grâce à l'invention, on évite d'associer au circuit de reconnaissance de signal vidéo un condensateur externe et, en l'absence du signal de synchronisation ligne, le VCO est amené à fonctionner à sa fréquence libre déterminée par le quartz associé ce qui fournit un signal de balayage horizontal stable pour le téléviseur, qui peut être utilisé par exemple pour réaliser des incrustations à l'écran.

Ces objets, caractéristiques et avantages ainsi que d'autres de la présente invention seront exposés plus en détail dans la description suivante d'un mode de réalisation particulier faite en relation avec les figures jointes parmi lesquelles :
la figure 1 décrite ci-dessus représente un circuit de fourniture de signal de balayage horizontal et de reconnaissance de signal de synchronisation ligne selon l'art antérieur ;
la figure 2 représente un circuit de fourniture de signal de balayage horizontal et de reconnaissance de signal de synchronisation ligne selon la présente invention ;
la figure 3 représente de façon plus détaillée un mode de réalisation du circuit de reconnaissance vidéo selon la présente invention ;
les figures 4A à 4D sont des chronogrammes destinés à mieux illustrer le fonctionnement du circuit selon la présente invention ; et
les figures 5A à 5C représentent à plus grande échelle un chronogramme destiné à expliquer le fonctionnement d'un dispositif selon la présente invention.

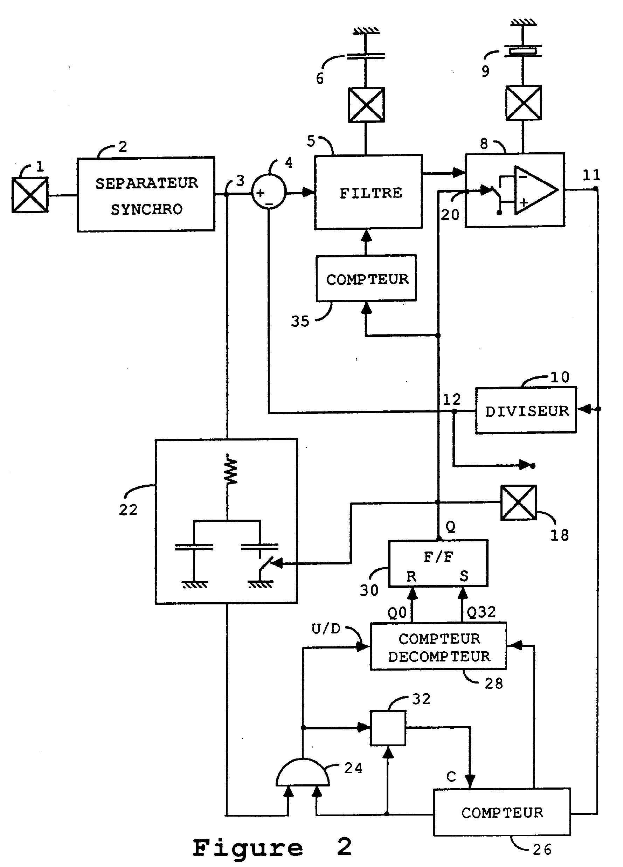

A la figure 2, les mêmes éléments qu'en figure 1 sont désignés par les mêmes références numériques. Ainsi, on retrouve en figure 2 les éléments et connexions désignés par les références 1 à 12. Comme dans le cas de la figure 1, le filtre 5 comprend une entrée de commutation de constante de temps. A la différence de la figure 1, le VCO de la figure 8 comprend des moyens de commutation commandés par une borne d'entrée 20 pour déterminer que le VCO 8 est connecté dans la boucle à verrouillage de phase ou que le VCO 8 fonctionne sur sa fréquence libre déterminée par le quartz 9.

Le circuit de reconnaissance de signal de synchronisation selon l'invention comprend un filtre d'entrée passe-bas 22 recevant le signal de synchronisation éventuellement présent à la sortie du séparateur de synchronisation 2 et fournissant son signal de sortie à une première entrée d'une porte ET 24. La deuxième entrée de la porte ET 24 est connectée à la sortie du VCO 8 par l'intermédiaire d'un compteur de génération de fenêtre 26. La sortie de la porte ET 24 est reliée à l'entrée de comptage/décomptage (U/D) d'un compteur/décompteur 28 dont l'entrée de signal est fournie par une sortie du compteur 26. Le compteur/décompteur comprend une première sortie Q₃₂ indiquant qu'il a atteint son comptage maximal et une deuxième sortie Q₀ indiquant qu'il est revenu à zéro. Ces sorties Q₃₂ et Q₀ sont respectivement reliées aux entrées S (mise à 1) et R (remise à zéro) d'une bascule 30 dont la sortie Q fournit sur la borne 18 le signal de reconnaissance de signal de synchronisation ligne recherché. Un circuit logique 32 est relié à la borne d'effacement C du compteur 26 pour refaire partir son comptage à zéro ou bien à la fin de la fenêtre fournie par ce compteur 26 ou bien quand la porte ET 24 a indiqué la présence d'une impulsion de synchronisation dans la fenêtre.

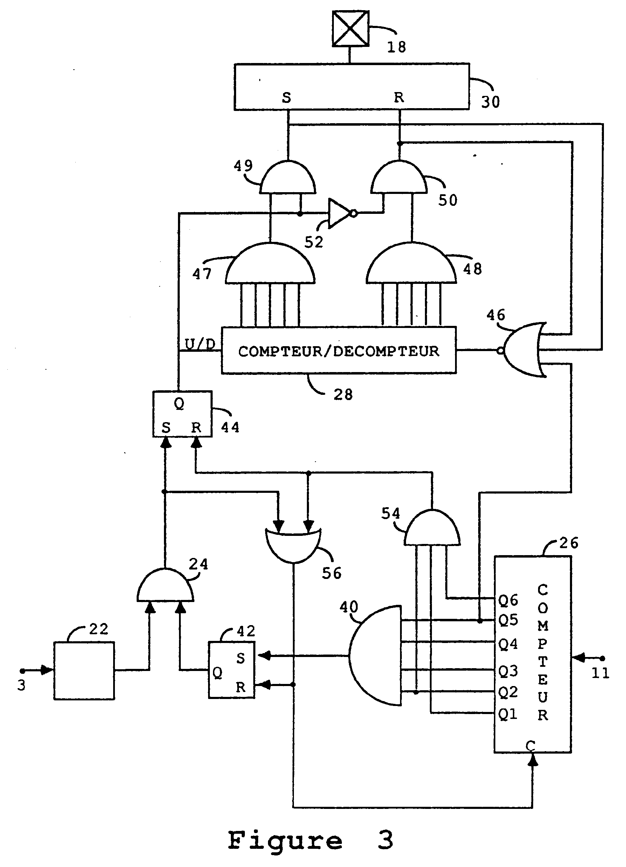

Le fonctionnement du circuit de la figure 2 sera exposé plus en détail en relation avec un mode de réalisation particulier illustré en figure 3. On notera ici que le signal de reconnaissance de synchronisation ligne RV est utilisé à l'intérieur du circuit lui-même de trois manières :
- il est appliqué à la borne de commande 20 du VCO 8 pour le mettre en circuit dans la boucle quand le signal de synchronisation a été détecté, et pour l'amener à fonctionner sur sa fréquence libre en l'absence de signal de synchronisation de ligne ;
- il est envoyé à un compteur 35 relié au filtre 5 pour amener ce filtre 5 à fonctionner avec une constante de temps relativement brève à partir de l'instant où le signal de synchronisation de ligne a été détecté, par exemple pendant une durée de quatre trames de télévision, puis à fonctionner ensuite sur une fréquence plus longue permettant une meilleure stabilité de la boucle et une meilleure élimination de bruit ;
- il est appliqué au filtre 22 de façon que la sélectivité de ce filtre soit plus faible une fois que le signal de synchronisation ligne a été reconnu (en fait, sa fréquence de coupure sera augmentée).

La figure 3 représente un mode de réalisation particulier de la présente invention. De mêmes éléments qu'en figure 2 y sont désignés par de mêmes références numériques. Ainsi, on retrouve en figure 3 le filtre 22, la porte ET 24, le compteur 26, le compteur/décompteur 28 et la bascule 30 fournissant une sortie sur une borne 18.

On suppose ci après, à titre d'exemple, que le VCO 8, quand il oscille sur sa fréquence libre, fonctionne à une fréquence de 500 kHz qui représente sensiblement 32 fois la fréquence attendue du signal de synchronisation ligne.

En ce cas, le diviseur 10 de la figure 2 sera un diviseur par 32. Le compteur 26 qui reçoit le signal de sortie de la borne 11 du VCO 8 est un compteur à 6 bits dont les sorties Q2 à Q5 sont connectées à des entrées d'une porte ET 40 dont la sortie est connectée à l'entrée S d'une bascule 42. La sortie Q de cette bascule est connectée à une entrée de la porte ET 24 dont l'autre entrée reçoit la sortie du filtre 22. La sortie de la porte ET 24 est connectée à l'entrée S d'une bascule 44 dont la sortie Q est connectée à l'entrée de comptage/décomptage U/D du compteur/décompteur 28. Ce compteur/décompteur reçoit sur son entrée d'horloge la sortie d'une porte NON OU 46 dont une entrée est reliée à la borne Q5 du compteur 26, celle-ci fournissant le signal d'horloge de comptage/décomptage dont la période est proche de la période ligne.

Le compteur/décompteur 28 est un circuit à 32 états dont les sorties Q1 à Q5 sont connectées aux entrées d'une porte ET 47 et dont les sorties inversées sont connectées aux entrées d'une porte ET 48. Les sorties des portes ET 47 et 48 sont appliquées respectivement aux entrées S et R de la bascule 30 par l'intermédiaire de portes ET respectives 49 et 50. La porte ET 49 est validée par la sortie Q de la bascule 44 et la porte ET 50 est validée par ce même signal de sortie de la bascule 44 par l'intermédiaire d'un inverseur 52. Ainsi, pour tout passage à 1 de la bascule 44, l'une ou l'autre des portes ET 49 et 50 est validée. Les sorties des portes ET 49 et 50 sont également appliquées à deux autres entrées de la porte NON OU 46 afin de stopper l'incrémentation ou la décrémentation du compteur/décompteur 28 lorsque celui-ci a atteint respectivement son comptage maximal ou son comptage minimal.

Les sorties Q1, Q2 et Q6 du compteur 26 sont reliées par l'intermédiaire d'une porte ET 54 à l'entrée de remise à zéro R de la bascule 44. La sortie de la porte ET 54 est également reliée par l'intermédiaire d'une porte OU 56 à l'entrée de remise à zéro R de la bascule 42 et à l'entrée de remise à zéro C du compteur 26. La deuxième entrée de la porte OU 56 est reliée à la sortie de la porte ET 24.

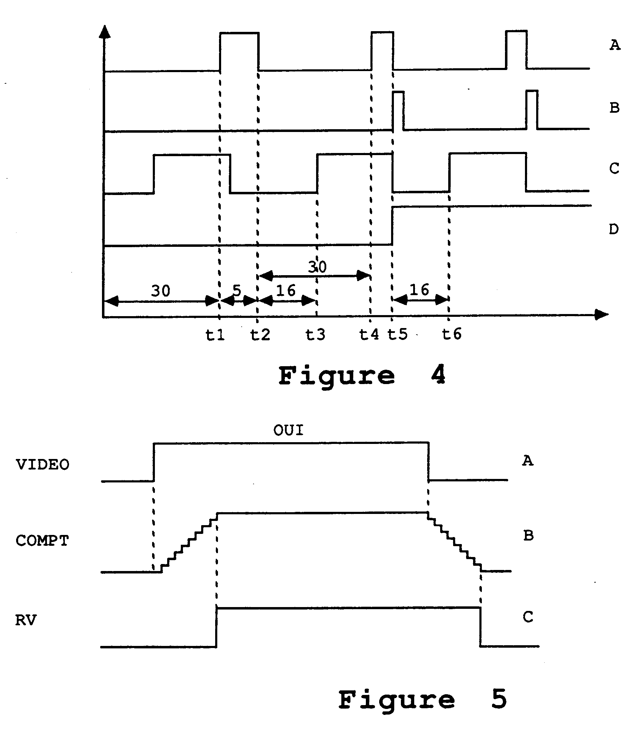

Le fonctionnement de ce circuit sera mieux compris en relation avec les chronogrammes de la figure 4. La porte ET 40 fournit un signal à bas niveau tant que les sorties Q2, Q3, Q4 et Q5 sont à bas niveau. Quand ces sorties passent à haut niveau, ce qui correspond à un comptage de 16 + 8 + 4 + 2 = 30 impulsions, c'est-à-dire une durée de 60 microsecondes dans le cas où le VCO 8 présente une fréquence libre de 500 kHz, la sortie de la porte ET 40 passe à haut niveau commandant ainsi le passage à haut niveau de la sortie Q de la bascule 42. Ceci correspond à l'instant t₁ de la figure 4A. Cette sortie Q reste à haut niveau tant qu'aucun signal n'est appliqué sur l'entrée R de la bascule 42, pour fournir ce qui a été appelé ci-dessus une fenêtre.

En supposant qu'on se trouve dans un cas où il n'y a pas d'impulsions de synchronisation ligne sur l'autre entrée de la porte ET 24, la remise à zéro de la bascule 42 est déterminée par la sortie de la porte ET 54 qui est connectée aux sorties Q6, Q2 et Q1 du compteur 26, c'est-à-dire qui bascule au bout de 32 + 2 + 1 = 35 comptages, soit 70 microsecondes. Simultanément le compteur 26 est également ramené à zéro. Ainsi, comme le montre la figure 4A, la fenêtre "se referme" au bout de 10 microsecondes, à l'instant t₂. La porte ET 24 dont l'autre entrée n'a pas reçu de signal n'a pas été validée. La sortie de la porte 54 en même temps qu'elle a effectué la remise à zéro de la bascule 42 et du compteur 26 effectue une remise à zéro de la bascule 44 et positionne le compteur/décompteur 28 en décomptage. Ce compteur 28 reçoit sur son entrée d'incrémentation le signal Q5 qui passe à haut niveau à un instant t₃, 16 comptages après l'instant t₂. Le compteur/décompteur 28 est donc décrémenté d'une unité à ce moment.

On suppose maintenant que lors de l'apparition de la fenêtre suivante une impulsion de synchronisation ligne (figure 4B) apparaît au cours de la fenêtre. Ainsi, si la fenêtre s'ouvre à un instant t₄ et que l'impulsion de synchronisation apparaît à un instant t₅, moins de 10 microsecondes après l'instant t₄, sous l'action de la porte OU 56, la bascule 42 et le compteur 26 sont remis à zéro et, en raison du passage de l'état haut à l'instant t₅ de la sortie de la porte ET 24, la bascule 44 passe à haut niveau validant le compteur/décompteur 28 à l'état de comptage, d'où il résulte qu'à l'instant t₆, 16 comptages du compteur 26 après sa remise à zéro, un signal est appliqué à l'entrée d'incrémentation du compteur/décompteur 28 incrémentant d'une unité son comptage.

La figure 4D représente le passage à haut niveau à l'instant t₅ de l'entrée de comptage/décomptage du compteur/décompteur 28. Etant donné que l'intervalle normal entre impulsions de synchronisation est de 64 microsecondes, l'impulsion de synchronisation ligne suivante, s'il y en a une, tombera dans la fenêtre fournie par la bascule 42 puisque cette fenêtre est ouverte dans l'intervalle de temps allant de 60 à 70 microsecondes après l'apparition de l'impulsion de synchronisation ligne précédente.

Les figures 5A à 5C sont des chronogrammes destinés à illustrer le fonctionnement de la présente invention représentés à plus grande échelle que les chronogrammes des figures 4A à 4D. Le chronogramme de la figure 5A indique que pendant une certaine période, marquée "OUI" des impulsions vidéo sont présentes. Alors, comme le représente la figure 5B, l'état du compteur/décompteur 28 croît jusqu'à atteindre un comptage prédéterminé, ici la valeur 32. A ce moment, la porte ET 47 qui reçoit sur ses cinq entrées les cinq sorties du compteur/décompteur change d'état et fournit un signal à haut niveau qui agit sur l'entrée S de la bascule 30 par l'intermédiaire de la porte ET 49. On obtient donc à la sortie de la porte ET 30, comme le représente la figure 5C, un signal de reconnaissance RV qui passe à haut niveau quand le comptage du compteur/décompteur 28 a atteint 32. Ensuite, si l'on suppose que le signal de synchronisation vidéo n'est plus présent, le compteur/décompteur se décrémente progressivement et, quand toutes ses sorties sont à zéro, la porte ET 48 fournit un signal à haut niveau qui est appliqué à l'entrée R de la bascule 30 par l'intermédiaire de la porte ET 50. Alors, le signal RV passe à bas niveau comme le représente la figure 5C.

Bien que cela ne soit pas représenté, on comprendra que s'il y a eu une courte interruption d'impulsions de synchronisation, inférieure à 32 absences de tops de synchronisation, suivie d'une reprise de ces impulsions, le compteur/décompteur 28 commencera à décompter mais n'arrivera pas à l'état à zéro et son état remontera ensuite quand le signal vidéo reprendra. Il n'y aura donc pas d'interruption du signal RV.

Bien entendu, ce qui précède ne constitue qu'un mode de réalisation particulier de la présente invention et l'homme de l'art des circuits logiques pourra prévoir d'autres circuits logiques équivalents satisfaisant les mêmes fonctions que celles décrites dans le cas du mode de réalisation détaillé de la figure 3.

## Revendications

1. Circuit de reconnaissance d'un signal de synchronisation ligne dans un signal vidéo dans lequel un signal de synchronisation est envoyé à une boucle à verrouillage de phase comprenant un oscillateur (3) à fréquence commandée par une tension (VCO) pour fournir un signal de balayage ligne à un moyen d'affichage, caractérisé en ce qu'il comprend :
des premiers moyens (20) pour inhiber le fonctionnement de la boucle et faire osciller le VCO à sa fréquence libre, voisine de la fréquence ligne attendue ou multiple de cette fréquence ligne attendue, en l'absence d'un signal de validation,
des deuxièmes moyens (26, 40, 42, 54, 56) pour produire une fenêtre de détection en relation avec les oscillations du VCO, cette fenêtre étant une fenêtre glissante, qui est synchronisée sur la première apparition d'un signal de synchronisation ligne et qui glisse à nouveau de manière synchrone avec les oscillations dudit VCO si aucun signal de synchronisation n'apparaît dans la fenêtre, la durée de capture d'un signal de synchronisation par la fenêtre étant au plus un nombre déterminé de périodes du signal de synchronisation,
des troisièmes moyens (24, 44) pour détecter la présence du signal de synchronisation dans ladite fenêtre,
des quatrièmes moyens (28, 30, 46, 52) comprenant un compteur/décompteur (28) s'incrémentant ou se décrémentant en fonction de la sortie des troisièmes moyens et des moyens de bascule (30), agissant pour fournir ledit signal de validation dès que le compteur/décompteur a atteint un comptage déterminé et jusqu'à ce qu'il ait décompté à une valeur nulle, ledit comptage déterminé étant supérieur audit nombre prédéterminé, le compteur/décompteur recevant en entrée de comptage un signal correspondant au signal fourni par le VCO ou un sous-multiple de ce signal.

2. Circuit de reconnaissance d'un signal de synchronisation ligne dans un signal vidéo selon la revendication 1, caractérisé en ce que ladite boucle comprend un filtre (5) dont la constante de temps peut être commutée entre des valeurs haute et basse, et qu'il est commuté sur la valeur basse à partir de l'arrivée du signal de validation et pendant une durée déterminée par un compteur (35).

3. Circuit de reconnaissance d'un signal de synchronisation ligne dans un signal vidéo selon l'une des revendications 1 ou 2, caractérisé en ce que le conducteur susceptible de recevoir les tops de synchronisation est relié aux troisièmes moyens par un filtre (22) dont la fréquence de coupure peut être commutée entre une valeur haute et une valeur basse, la commutation à la valeur haute d'effectuant en présence du signal de validation.

4. Circuit de reconnaissance d'un signal de synchronisation ligne dans un signal vidéo selon la revendication 1, caractérisé en ce que le VCO (8) a une fréquence libre qui est un multiple n-tuple d'une fréquence voisine de la fréquence attendue de synchronisation ligne, et les deuxièmes moyens comprennent :
un compteur (26) suivi d'une porte ET (40) reliée à l'entrée d'une bascule (42) fournissant un signal à un premier niveau pendant un premier nombre prédéterminé d'impulsions du VCO, la durée correspondante étant inférieure à la période attendue du signal de synchronisation ligne, et un signal à un deuxième niveau formant une fenêtre pendant, au plus, un second nombre prédéterminé d'impulsions du VCO, la durée correspondant au comptage de la somme des premier et second nombres étant supérieure à ladite période attendue, et
des moyens (54, 56) pour remettre à zéro ledit compteur à la fin du comptage du second nombre ou en réponse à l'arrivée d'un top de synchronisation dans la fenêtre.

## Patentansprüche

1. Schaltung zum Erkennen eines Zeilensynchronisationssignales in einem Videosignal, wobei ein Synchronisationssignal zu einer Phasenverriegelungschaltung geschickt wird, die einen spannungsgesteuerten Oszillator (3, VCO) aufweist, um ein Zeilenabtastsignal an eine Anzeigeeinrichtung zu liefern, gekennzeichnet durch folgende Merkmale:
eine erste Einrichtung (20), um die Funktion der Phasenverriegelungschaltung in Abwesenheit eines Bestätigungssignales zu sperren und den VCO mit seiner Freilauffrequenz schwingen zu lassen, die benachbart der gewünschten Zeilenfrequenz oder,ein Vielfaches dieser Frequenz ist,
zweite Einrichtungen (26, 40, 42, 54, 56), um ein Detektionsfenster in Beziehung mit den Schwingungen des VCO zu erzeugen, wobei dieses Fenster ein gleitendes Fenster ist, das mit dem ersten Auftreten eines Zeilensynchronisationssignales synchronisiert ist und danach synchron mit den Schwingungen des VCO gleitet, wenn kein Synchronisationssignal in dem Fenster erscheint, wobei die Einfangdauer eines Synchronisationssignales durch das Fenster höchstens einer bestimmten Anzahl von Perioden des Synchronisationssignales entspricht,
dritte Einrichtungen (24, 44) zum Erkennen des Vorliegens eines Synchronisationssignales in dem Fenster,
vierte Einrichtungen (28, 30, 46, 52) mit einem Aufwärts/Abwärtszähler (28), der in Abhängigkeit des Ausgangssignales der dritten Einrichtungen aufwärts oder abwärts zählt, und einer Kippschaltung (30), die das Bestätigungssignal abgibt, sobald der Aufwärts/Abwärtszähler einen vorbestimmten Zählwert erreicht und bis er auf den Wert Null herabgezählt hat, wobei dieser vorbestimmte Zählwert größer als die genannte bestimmte Anzahl ist und wobei der Aufwärts/Abwärtszähler an seinem Zähleingang ein Signal empfängt, das dem von dem VCO abgegebenen Signal entspricht oder ein Bruchteil-Vielfaches dieses Signales ist.

2. Schaltung zum Erkennen eines Zeilensynchronisationssignales in einem Videosignal nach Anspruch 1, dadurch gekennzeichnet, daß die Phasenverriegelungsschaltung einen Filter (5) aufweist, dessen Zeitkonstante zwischen einem hohen und einem niedrigen Wert umgeschaltet werden kann und der auf den niedrigen Wert beim Eintreffen des Bestätigungssignales und während einer durch einen Zähler (35) vorbestimmten Zeitdauer umgeschaltet wird.

3. Schaltung zum Erkennen eines Zeilensynchronisationssignales in einem Videosignal nach einem der Ansprüche 1 oder 2, dadurch gekennzeichnet, daß die Leitung, auf der die Synchronisationsimpulse empfangen werden, mit den dritten Einrichtungen über einen Filter (22) verbunden ist, dessen Grenzfrequenz zwischen einem niedrigen und einem hohen Wert umgeschaltet werden kann, wobei die Umschaltung auf den hohen Wert bei Vorliegen des Bestätigungssignales erfolgt.

4. Schaltung zum Erkennen eines Zeilensynchronisationssignales in einem Videosignal nach Anspruch 1, dadurch gekennzeichnet, daß der VCO (8) eine Freilauffrequenz hat, die ein n-faches Vielfaches einer der gewünschten Zeilensynchronisationsfrequenz benachbarten Frequenz ist, und daß die zweiten Einrichtungen aufweisen:
einen Zähler (26), gefolgt von einem UND-Tor (40), das mit dem Eingang einer Kippschaltung (42) verbunden ist, zum Liefern eines Signales mit einem ersten Pegel während einer ersten vorbestimmten Anzahl von Impulsen des VCO, wobei die entsprechende Zeitdauer kleiner als die gewünschte Periode des Zeilensynchronisationssignales ist, und eines Signales mit einem zweiten Pegel, das ein Fenster während höchstens einer zweiten vorbestimmten Anzahl von Impulsen des VCO bildet, wobei die Zeitdauer entsprechend einer Zählung der Summe der ersten und zweiten Anzahl größer als die gewünschte Periode ist, und
Einrichtungen (54, 56), um den besagten Zähler am Ende der Zählung der zweiten Anzahl oder in Antwort auf das Eintreffen eines Synchronisationsimpulses in dem Fenster auf Null zurückzusetzen.

## Claims

1. A circuit for detecting a line synchronization signal in a video signal wherein a synchronization signal is sent to a phase locked loop comprising a voltage controlled oscillator (VCO 8) for supplying a line scanning signal to a display means, characterized in that it comprises:
first means (20) for inhibiting the operation of the loop and letting the VCO oscillate at its free frequency, close to the desired line frequency or multiple of this desired line frequency, in the absence of an enabling signal,
second means (26, 40, 42, 54, 56) for generating a detection window in relation with the oscillations of the VCO, said window being a sliding window, synchronized on the first occurrence of a line synchronization signal and sliding again in synchronism with the oscillations of said VCO if no synchronization signal appears in the window, the catching duration of a synchronization signal by the window being at most a determined number of periods of the synchronization signal,
third means (24, 44) for detecting the presence of the synchronization signal in said window,
fourth means (28, 30, 46-52) comprising an up/down counter (28) incrementing or decrementing as a function of the output of the third means and flip-flop means (30) acting to provide said enabling signal as soon as the up/down counter has reached a predetermined count and until it has counted down to a null value, said predetermined count being higher than said determined number.

2. A line synchronization signal detection circuit according to claim 1, wherein said loop comprises a filter (5), the time constant of which can be switched between high and low values, characterized in that said filter is switched at the low value at the occurrence of the enabling signal and for a duration predetermined by a counter (35).

3. A line synchronization signal detection circuit according to claim 1 or 2, characterized in that the conductor liable to receive the synchronization tops is connected to the third means through a filter (22), the cut-off frequency of which can be switched between a high and a low value, the transition to the high value occurring in the presence of the enabling signal.

4. A line synchronization signal detection circuit according to claim 1, wherein the VCO (8) has a free frequency which is an n-fold multiple of a frequency close to the desired line synchronization frequency, characterized in that said second means comprise:
a counter (26) followed by an AND gate (40) connected to the input of a flip-flop (42) supplying a signal at a first level during a first predetermined number of pulses of the VCO, the corresponding duration being lower than the desired period of the line synchronization signal, and a signal to a second level forming a window during, at the most, a second predetermined number of pulses of the VCO, the duration corresponding to the sum of the first and second numbers being higher than said desired period, and
means (54, 56) for resetting said counter at the end of the counting of the second number or in response to the occurrence of a synchronization top in the window.
